# EUROPÄISCHE PATENTSCHRIFT

(11) **EP 2 922 655 B1**
(45) Veröffentlichungstag und Bekanntmachung des Hinweises auf die Patenterteilung: **28.12.2016**
(21) Anmeldenummer: 13791983.3
(22) Anmeldetag: 13.11.2013
(51) Int. Cl.: B23K 1/00, H02K 5/20, H02K 9/10, H02K 9/14, H02K 9/22

(54) **VERFAHREN ZUM VERLÖTEN VON EINEM STÄNDER**
METHOD OF SOLDERING A STATOR TO A COOLER
METHODE DE BRASAGE D'UN STATOR ET D'UN REFROIDISSEUR

(30) Priorität: 22.11.2012 DE 102012022873
(43) Veröffentlichungstag der Anmeldung: 30.09.2015
(73) Patentinhaber: Compact Dynamics GmbH, 82319 Starnberg (DE)
(72) Erfinder: SONTHEIM, Johann, 82346 Andechs (DE); MENHART, Michael, 86859 Igling/Holzhausen (DE)
(74) Vertreter: Schmidt, Steffen J.
(86) Internationale Anmeldenummer: PCT/EP2013/073673
(87) Internationale Veröffentlichungsnummer: WO 2014/079742

(56) Entgegenhaltungen:
- DE-A1- 4 040 002
- DE-A1- 19 651 959
- RU-A- 2007 105 084
- US-A1- 2005 231 051
- US-A1- 2008 115 527
- US-A1- 2011 285 222
- DATABASE WPI Week 197822 Thomson Scientific, London, GB; AN 1978-39902A XP002722080, -& SU 564 932 A (VOROSHILOVGRAD DIES) 15. August 1977 (1977-08-15)

## Beschreibung

Hier wird ein Verfahren zum Verlöten eines Ständers einer elektrischen Maschine mit einem Kühler gemäß dem Oberbegriff des Anspruchs 1 (siehe, z.B., US2008/115527 A1) beschrieben, das eine verbesserte Entwärmung der elektrischen Maschine erlaubt.

Unter einer elektrischen Maschine wird hierbei eine elektrische Maschine in Form einer Innen- oder Außenläufermaschine verstanden. Eine elektrische Maschine kann hierbei sowohl ein elektrischer Motor als auch ein elektrischer Generator sein. Der hier beschriebene Ständer kommt insbesondere bei Drehmaschinen aller Art (Synchron-, Asynchron-, Reluktanzmaschinen, Permanenterregte Maschinen oder dergl.) zum Einsatz.

Elektrische Maschinen haben Effizienzverluste durch Wärmeentwicklung im Elektroblech des Ständers aufgrund von Wirbelstrom- oder Hystereseeffekten und in der Wicklung aufgrund ohmscher Verluste. Diese Wärmeenergie muss abgeführt werden. Bei einer hocheffizienten elektrischen Maschine mit etwa 5 kW / kg für das Ständerpaket sind selbst bei optimaler Auslegung immer noch etwa 10 Prozent ihrer Leistung als Wärme abzuführen. Eine solche Maschine kann daher nur mit einer hocheffizienten Kühlung betrieben werden, damit die Temperatur im Ständerpaket und/oder der Wicklung die Grenztemperatur der verwendeten Materialien nicht überschreitet. Für eine Außenläufermaschine bietet sich zum Beispiel eine Kühlung über die Innenseite des Ständers an. Für eine Innenläufermaschine bietet sich zum Beispiel eine Kühlung über die Außenseite des Ständers an.

### Stand der Technik

Bekannt ist aus der DE 196 51 959 A1 ein Innenläufermotor, in dessen Ständergehäuse ein Ständerblechpaket eingegossen ist. Zur Kühlung ist eine das Ständerblechpaket umwindende Kühlrohrschlange vorgesehen, die in die Einheit aus dem Ständergehäuse und Ständerblechpaket integriert ist. Die Kühlrohrschlange kann aus einem Metallrohr mit ovalem oder abgeflacht ovalem Querschnitt gebildet sein.

Die WO 2002 / 075901 A1 - Compact Dynamics - offenbart eine fluidgekühlte elektrische Maschine mit einem Gehäuse, in dem ein Ständer und ein Rotor mit Ständer- und/oder Rotorspulen angeordnet sind. Die elektrische Maschine ist mit einer an ihrem Umfang angeordneten Kühleinrichtung wärmeleitend gekoppelt und mit einer elektronischen Leistungsansteuerung verbunden. Die elektronische Leistungsansteuerung ist in mehrere Module aufgeteilt, die jeweils mit wenigstens einer der Ständer- oder Rotorspulen elektrisch verbunden sind. Die Module sind am Umfang der elektrischen Maschine verteilt und an der Kühleinrichtung radial außen- oder innenliegend angeordnet und mit dieser wärmeleitend gekoppelt. Die Kühleinrichtung ist von Fluidkanälen durchzogen und hat an ihrer Außen- oder Innenwand eine Öffnung zu wenigstens einem der Fluidkanäle, in die an den Modulen angeordnete Kühlelemente hineinragen.

Bei solchen bekannten Systemen werden die Ständerelemente (Segmente oder Ringe) mittels Wärmeleitkleber an dem Kühler / Ständerträger verklebt. Der Wärmeleitwert des Klebers beschränkt die abzuführende Verlustleistung. Durch den Temperaturgradienten am Kleber kommt es zu Differenztemperaturen zwischen Ständer und Kühler/Ständerträger, was zu unterschiedlichen Ausdehnungen und somit zu einer Schädigung des Klebers führt. Die Schädigung des Klebers kann zum Verlust der Wärmeleitung und der mechanischen Verbindung zwischen dem Ständer und dem Kühler/Ständerträger, und somit zum Systemausfall führen.

Die DE 10 2005 043 313 A1 offenbart eine rotierende elektrische Maschine mit einem flüssigkeitsgekühlten Stator, die DE 101 45 521 A1 eine Kühlung für einen Elektromotor mit einem Wärme vom Stator abführenden Wärmetauscher und die DE 10 2006 044 785 A1 eine flüssigkeitsgekühlte elektrische Maschine mit einem Kühlsystem mit einer korrosionsbeständigen Kühlstruktur. Die DE 197 30 865 C2 beschreibt eine Kühlkörperanordnung zum Kühlen von elektronischen Bauelementen oder Leiterplatten aus Keramikwerkstoffen.

Die DE 10 2004 026 490 A1 offenbart ein Verfahren zum Applizieren von Loten auf Grundwerkstoffe im Wege eines thermischen Spritzverfahrens und die DE 1 627 541 A ein Verfahren zum Erzielen gleichmäßiger Lötspalte zwischen Werkstücken mit gekrümmten Lötflächen. Aus der DE 1 627 470 A ist zudem ein Verfahren zum Einlöten von Lagermetallbuchsen in Bohrungen eines Grundwerkstoffs bekannt.

Die DE 10 2008 047 076 A1 beschreibt ein Lötbauteil mit Lötdepot und einen Wärmetauscher, der mit diesem Lötbauteil versehen ist, die DE 20 2005 004 807 U1 ein Bauteil aus Aluminiummaterial mit einer Oberflächenbeschichtung für die Hartverlötung und die DE 35 36 296 C1 eine Nockenwelle mit einer in eine Bohrung der Nocke gelöteten Welle.

### Zugrundeliegendes Problem

Bei einem gekühlten Ständer einer elektrischen Maschine soll der Wärmeleitwert des Kopplungsmaterials erhöht werden. Zudem soll die Stabilität der thermischen und mechanischen Anbindung zwischen den Bauteilen verbessert werden.

### Vorgeschlagene Lösung

Zur Lösung wird ein Verfahren zum Verlöten eines Ständers einer elektrischen Maschine mit einem Kühler gemäß dem Anspruch 1 vorgeschlagen. Zunächst erfolgt ein zumindest abschnittsweises Beschichten des Ständers und/oder des Kühlers mit einer Lotschicht. Dann wird der Ständer mit dem Kühler derart zusammengeführt, dass die Lotschicht sich zwischen dem Ständer und dem Kühler befindet. Schließlich wird der Kühler auf die Schmelztemperatur der Lotschicht erwärmt, um eine Lotverbindung zwischen dem Ständer und dem Kühler herzustellen.

Dabei kann der Kühler auch als Träger dienen.

Dabei kann der Ständerträger auch als Kühler dienen.

Diese Lösungen führen zu einer sehr guten thermischen Kontaktierung zwischen Ständer und Kühler/Träger. Des Weiteren ermöglicht das Lot eine dauerhafte thermische und mechanische Anbindung zwischen den Bauteilen. Durch die stabile thermische Anbindung des Ständers mit dem Kühlsystem können wesentlich höhere Verlustleistungen abgeführt werden. Dies ermöglicht eine Erhöhung der Motorleistung der elektrischen Maschine.

Zusammenfassend ermöglichen diese Lösungen eine möglichst gute thermische Kopplung zum Kühler zur Entwärmung des Ständers. Da der Kühler zudem als Träger dienen kann, werden alle Kräfte, die auf den Ständer einwirken, über die - sehr robuste - Lotverbindung in den Kühler / Ständerträger abgeleitet.

Der Läufer/Ständerträger kann Stahl enthalten. Der Ständer kann Sheet Molding Composite (SMC)-Material enthalten.

Bei dem vorgeschlagenen Verfahren kann das Lotmaterial Zinn enthalten, beziehungsweise bei dem vorgeschlagenen Ständer kann die Lotverbindung Zinn enthalten. Somit wird kein aggressives Flussmittel benötigt, sodass eine Beschädigung des Ständers durch ein solches Flussmittel vermieden werden kann.

Bei bekannten Lotzusatzmaterialien, die als Paste oder als Folie auf die Bauteile aufgebracht werden, kommt es bei der Montage der Bauteile zum Abstreifen der Paste bzw. zu einer undefinierten Lage der Lotfolie. Diese schwer zu kontrollierende Beschichtung der Ständerfläche mit der Paste / der Folie hat im Erwärmungsschritt zur Folge, dass zwischen dem Ständer und dem Kühler eine mangelhafte thermische Anbindung entsteht. Im Betrieb kann dies zum Heißlaufen der elektrischen Maschine und sogar zu einem Kurzschluss in der Wicklung führen.

Um dieses Problem zu vermeiden, kann der Beschichtungsschritt durch galvanisches Verzinnen des Ständers und/oder des Kühlers erfolgen. Danach werden diese Bauteile "trocken" zusammen gefügt, sodass eine gleichmäßige Verteilung des Lotmaterials in Vorbereitung auf den Erwärmungsschritt sicher gestellt ist.

Denkbar sind dabei Ausführungsformen, bei denen nur eine Zinnschicht vorgesehen ist. Beispielsweise kann nur der Ständer eine Zinnschichtaufweisen, wobei der Kühler keine Zinnschicht aufweist, oder umgekehrt.

Des Weiteren müssen die Zinnschichten nicht lückenlos entlang der Umfangsflächen der Ständer bzw. Kühler verlaufen. Die Zinnschichten können beispielsweise Aussparungen enthalten, oder lediglich punktweise oder stellenweise auf den Ständer und/oder Kühler aufgebracht werden.

In einem möglichen Ausführungsbeispiel können die Ständer-Zinnschicht und die Kühler-Zinnschicht sich derart ergänzen, dass die Zinnschichten gemeinsam eine einzige, ununterbrochene Lotschicht bilden, wenn der Ständer mit dem Kühler zusammengeführt ist. Die Zusammenstellung der Zinnschichten kann aber auch symmetrische oder asymmetrische Aussparungen oder Lücken aufweisen.

Der Ständerträger oder Kühler ist gemäß der Erfindung von wenigstens einem Fluidkanal durchzogen. Dabei kann der wenigstens eine Fluidkanal entweder im Wesentlichen koaxial zur Mittellängsachse des Kühlers / Ständerträgers verlaufen oder den Kühler / Ständerträger wendelförmig oder schraubenlinienartig durchziehen.

Die Fluidkanäle des Kühlers können dabei eins-zu-eins im Verhältnis zu den Ständerwicklungen des Ständers stehen. Alternativ dazu kann das Verhältnis der Anzahl an Fluidkanälen zur Anzahl an Ständerwicklungen beliebig variieren. Dabei können die Fluidkanäle und/oder Ständerwicklungen jeweils regelmäßig oder unregelmäßig, symmetrisch oder asymmetrisch um eine Rotationsachse der elektrischen Maschine angeordnet sein. Ferner können die Fluidkanäle und Ständerwicklungen entlang einer Linie zur Rotationsachse angeordnet oder zueinander versetzt sein. Denkbar wäre dabei jegliche Kombination von kollinearen und versetzten Fluidkanälen und Ständerwicklungen.

Gemäß der Erfindung erfolgt der Schritt des Erwärmens dadurch, dass zunächst eine geringe Menge hochsiedender Flüssigkeit in den wenigstens einen Fluidkanal eingefüllt wird. Der Kühler wird anschließend an seiner von dem Ständer abgewandten Seite induktiv erwärmt, bis zum Verdampfen der Siedeflüssigkeit. Schließlich kondensiert die Siedeflüssigkeit in dem Fluidkanal wieder aus, um die Lotschicht auf seine Schmelztemperatur zu erwärmen. Durch die hohe Phasenänderungsenergie der Siedeflüssigkeit kommt es zu einer schnellen und gleichmäßigen Erwärmung des Lötbereichs.

Bei dieser Ausgestaltung kann ein Innendruck des Fluidkanals durch ein Überdruckventil begrenzt werden, sodass der durch das verdampfende Medium entstehende Druck bis zum Durchwärmen des Kühlers stabil bleibt. So wird sicher-gestellt, dass es zu keinem unzulässig hohen Innendruck kommt.

Bei Innenläufermaschinen kann im Schritt des Beschichtens eine äußere Umfangsfläche des Ständers und/oder eine innere Umfangsfläche des Kühlers mit der Lotschicht zumindest abschnittsweise beschichtet werden.

Bei Außenläufermaschinen kann im Schritt des Beschichtens eine äußere Umfangsfläche des Kühlers und/oder eine innere Umfangsfläche des Ständers mit der Lotschicht zumindest abschnittsweise beschichtet werden.

Eine elektrische Maschine kann mit einem Ständer der vorstehend beschriebenen Ausgestaltung ausgestattet sein.

### Kurze Beschreibung der Zeichnung

Weitere Einzelheiten, Merkmale, Vorteile und Wirkungen des vorliegend beschriebenen Verfahrens sowie des vorliegend beschriebenen Ständers ergeben sich aus der nachfolgenden Beschreibung sowie aus den Zeichnungen.

### Dabei zeigen:

- Fig. 1A: eine axial gerichtete schematische Ansicht auf die Stirnseite eines Ständers,
- Fig. 1B: eine axial gerichtete schematische Ansicht auf die Stirnseite eines Kühlers / Ständerträgers,
- Fig. 2: eine axial gerichtete schematische Ansicht auf die Stirnseite einer zusammengesetzten Baugruppe mit dem Ständer und dem Kühler / Ständerträger, und
- Fig. 3: die Baugruppe gemäß Fig. 2 mit einer fertigen Lotverbindung.

### Detaillierte Beschreibung der Zeichnung

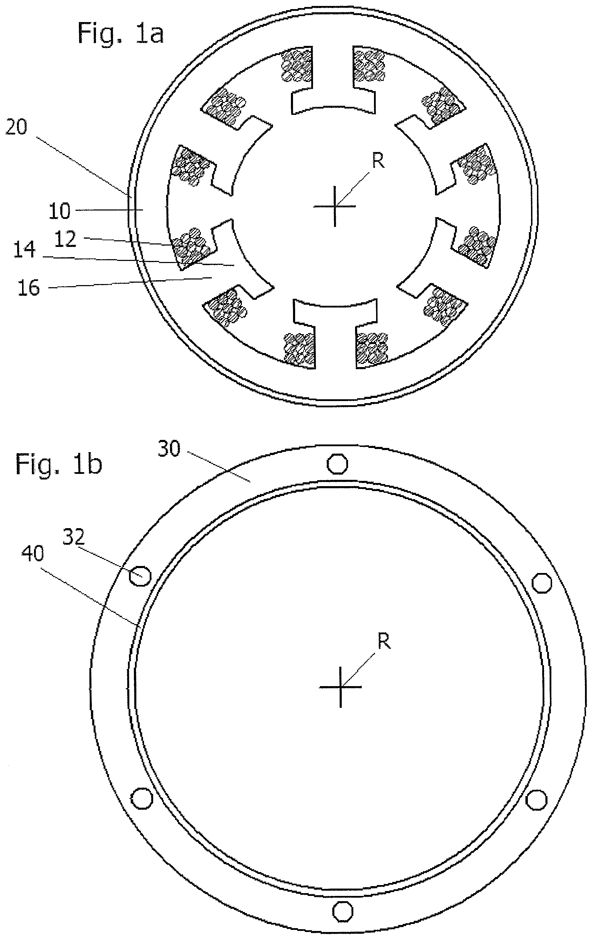

Wie in Fig. 1A veranschaulicht, ist der dargestellte Ständer 10 (hier einer Gleichstrommaschine) an seinem Innenumfang mit einer Vielzahl von Aufnahmenuten für Ständerwicklungen 12 versehen. Die Ständerwicklungen 12 umgeben jeweils einen Polkern 16. Jeder Polkern 16 hat an seinem zu einer Rotationsachse R gerichteten Ende einen Polschuh 14. Eine an die Aufnahmenuten angrenzende Öffnung dient zur Aufnahme eines (nicht gezeichneten) Innenläufers, der zur Drehung um eine Rotationsachse R vorgesehen ist.

Der Ständer 10 kann dabei ein Ständerpaket umfassen, mit mehreren gestapelten Lagen, sogenannte Ständerbleche, Ständerringe oder Ständersegmente, die in magnetischer Flussrichtung und damit senkrecht zur Wirbelstromrichtung geschichtet sind. Vorzugsweise umfassen die gestapelten Lagen flächige Faserverbundwerkstücke, die beispielsweise ein Sheet Molding Composite (SMC)-Material beinhalten. Zwischen benachbarten Lagen kann ein Schichtmaterial angeordnet sein, das beispielsweise unter anderem der Haftung dient.

Am äußeren Umfang des Ständers 10 ist eine Zinnschicht 20 angebracht, die als Lotzusatz dient. Dabei wird der Ständer 10 vorzugsweise galvanisch verzinnt, indem der Ständer 10 nach einer geeigneten Vorbehandlung in einen Zinnelektrolyten eingetaucht wird. Durch das Anlegen einer elektrischen Spannung scheidet sich an der Oberfläche des Ständers 10 ein Zinnüberzug ab. Der Ständer 10 erhält eine vorzugsweise minimale Schichtdicke als Kopplungsschicht. Sollte der Ständer 10 ein Ständerpaket mit mehreren Ständerringen/-segmenten umfassen, so wird die Zinnschicht 20 an der am Rand der Ständerringe/-segmente definierten Lotfläche abgedeckt, und anschließend werden die zwischen den Ständerringe/-segmente liegenden Flächen abgeätzt um schädliche Wirbelströme zu vermeiden.

In Fig. 1B ist ein Kühler 30 veranschaulicht. Anstelle eines Kühlers 30 gemäß Fig. 1B kann ein Ständerträger vorgesehen sein. Alternativ dazu kann der Kühler 30 gleichzeitig als Ständerträger dienen. Der Kühler/Ständerträger 30 beinhaltet vorzugsweise Stahl oder ein ähnlich starres Material.

Im radial äußeren Bereich des Kühlers 30 sind mehrere Fluidkanäle 32 vorgesehen, durch die im Betriebszustand ein Kühlfluid strömt. Die Fluidkanäle stellen ein geschlossenes System dar, indem sie einen Kreislauf bilden, durch den die durch eine externe Quelle gekühlte Flüssigkeit strömt. Die Fluidkanäle 32 durchziehen den Kühler 30 in axialer Richtung (koaxial zur Rotationsachse R). Alternativ dazu können die Fluidkanäle 32 den Kühler 30 wendelförmig durchziehen und dabei die Rotationsachse R schraubenlinienartig umgeben.

Bei einer (hier nicht veranschaulichten) Außenläufermaschine können auch ein oder mehrere zentrale Fluidkanäle vorgesehen sein, die im Zentrum des Kühlers koaxial zur Rotationsachse angebracht sind.

Der Kühler/Ständerträger 30 ist ebenso wie der Ständer 10 galvanisch verzinnt. Nach einer geeigneten Vorbehandlung wird der Kühler/Ständerträger 30 in einen Zinnelektrolyten eingetaucht. Durch das Anlegen einer elektrischen Spannung scheidet sich an der Oberfläche des Kühlers/Ständerträgers 30 ein Zinnüberzug ab. Diese Zinnschicht 40 dient als Lotzusatz. Die Menge des erforderlichen Lotes wird durch die Schichtdicke am Kühler/Ständerträger 30 eingestellt.

Die Zinnschichten 20, 40 können ausschließlich aus Zinn, oder alternativ aus einer Legierung oder sonstigen Mischung aus Zinn und anderen Metallen und/oder Materialien bestehen. Dabei kann die für die Ständer-Zinnschicht 20 verwendete Mischung von der für die Kühler-Zinnschicht 40 verwendete abweichen. Anstelle von Zinnschichten 20, 40 wären auch Lotschichten, die ausschließlich aus anderen Materialien als Zinn bestehen, denkbar.

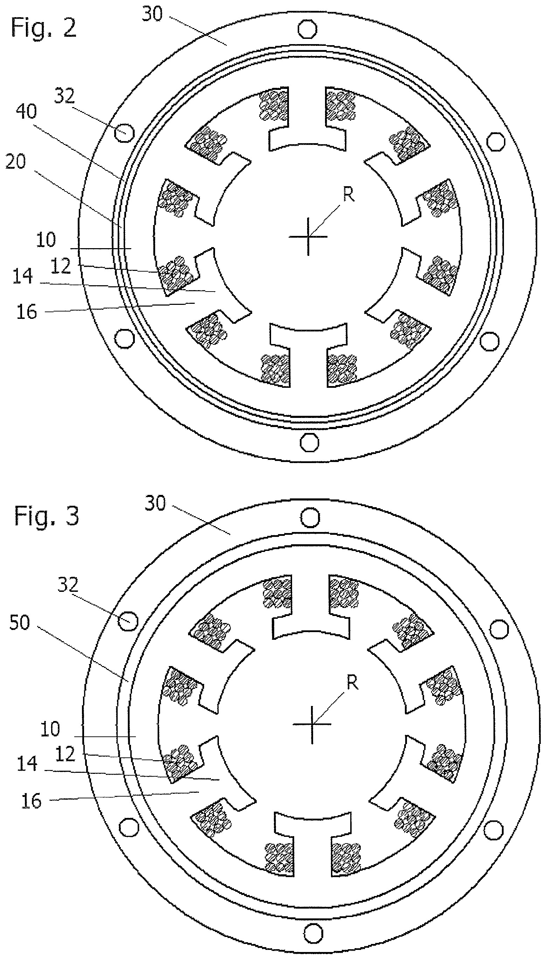

In Fig. 2 ist die zusammengesetzte Baugruppe mit dem Ständer 10 und dem Kühler 30 veranschaulicht. Der Ständer 10 aus Fig. 1A ist mit dem Kühler 30 aus Fig. 1B derart zusammengeführt, dass die jeweiligen Zinnschichten 20, 40 aufeinander liegen. Fig. 2 zeigt sechs Fluidkanäle 32 und sechs Ständerwicklungen 12, die derart angeordnet sind, dass axial versetzt zu jeder Ständerwicklung 12 ein Fluidkanal 32 steht. Der Ständer 10 wird im Betrieb durch die der Ständerwicklung 12 zugeführte elektrische Leistung erwärmt. Die Belastung des Ständers 10 durch die hohen Temperaturen ist durch die Temperaturverteilung im Ständer ortsabhängig. Dementsprechend verlaufen die Fluidkanäle 32 in der Nähe der Ständerwicklungen 12.

Nachdem Ständer 10 und Kühler 30 gemäß Fig. 2 zusammengeführt sind, werden diese Bauteile verlötet. Dabei werden die Zinnschichten 20, 40 auf ihre Schmelztemperatur aufgeheizt, um eine fertige Lotverbindung 50 herzustellen, wie in Fig. 3 veranschaulicht. Allerdings muss diese Lotverbindung 50 nicht lückenlos sein, wie in Fig. 3 gezeichnet, sondern kann eine oder mehrere Unterbrechungen oder Aussparungen aufweisen. Diese können entweder durch eine lückenhafte Verzinnung verursacht sein, oder durch stellenweise Verlötung der bestehenden Zinnschichten 20, 40 entstehen, beispielsweise durch nur punktuelle Erwärmung der Zinnschichten.

Die notwendige Erwärmung zur Erzielung des zumindest abschnittsweisen Verlötens der Zinnschichten 20, 40 kann auf unterschiedliche Weise erfolgen. Dabei ist zu beachten, dass ein die Ständerwicklungen 12 beschichtendes Isolationsmaterial dadurch nicht beschädigt wird, und keine aggressiven Flussmittel erforderlich sind.

In einem nicht von der Erfindung geschützten Beispiel geschieht die Erwärmung der Baugruppe durch beschicken der Fluidkanäle 32 mit einem Wärmeträgerfluid, das auf eine Temperatur oberhalb der Schmelztemperatur erwärmt ist. Durch das Erwärmen mittels Fluidkanäle 32 werden lediglich die Zinnschichten 20, 40 über die Schmelztemperatur erwärmt. Dabei werden temperaturempfindliche Bauteile wie die Ständerwicklungen 12 aufgrund des thermischen Widerstands des Ständermaterials deutlich geringer erwärmt und somit nicht beschädigt.

Das Wärmeträgerfluid kann jedes Fluid sein, beispielsweise ein Gas, das bei hohen Temperaturen nicht explosionsgefährlich ist, oder eine Flüssigkeit, die bei der Schmelztemperatur der Lotschichten 20, 40 eine derartige Viskosität aufweist, dass das Beschicken der Fluidkanäle 32 mit der Wärmeträgerflüssigkeit möglich ist. Um das Wärmeträgerfluid durch die Fluidkanäle 32 zu schicken, wird in einer ersten Variante eine externe Quelle des unter Druck stehenden Fluides, in einer weiteren Variante eine externe Pumpe bereitgestellt. Um das Wärmeträgerfluid zu erwärmen, wird beispielsweiseeine externe Wärmequelle bereitgestellt.

Gemäß der Erfindung wird zur Erwärmung der Zinnschichten 20, 40 eine geringe Menge hochsiedender Flüssigkeit, beispielsweise Galden HAT 240, in die Fluidkanäle 32 eingefüllt. Der Kühler 30 wird anschließend von der dem Ständer 10 abgewandten Seite induktiv erwärmt. Die Siedeflüssigkeit verdampft und kondensiert entlang der Fluidkanäle 32 wieder aus. Durch die hohe Phasenänderungsenergie der Siedeflüssigkeit kommt es zu einer schnellen und gleichmäßigen Erwärmung der Zinnschichten 20, 40.

Die Siedeflüssigkeit hat dabei einen Siedepunkt im Bereich der Schmelztemperatur der Zinnschichten 20, 40. Ferner ist die Siedeflüssigkeit so gewählt, dass sie auch bei hohen Temperaturen nicht explosionsgefährlich ist.

Um sicherzustellen, dass der Druck in den Fluidkanälen 32 durch das verdampfende Medium bis zum Durchwärmen des Kühlers stabil bleibt, ist bei einer Variante ein externes Überdruckventil vorgesehen, sodass es zu keiner unzulässigen Erhöhung des Innendruckes in den Fluidkanälen 32 kommt.

## Patentansprüche

1. Verfahren zum Verlöten eines Ständers (10) einer elektrischen Maschine mit einem Kühler (30) mit den Schritten:
- zumindest abschnittsweises Beschichten des Ständers (10) und/oder des Kühlers (30) mit einer Lotschicht (20, 40);
- Zusammenführen des Ständers (10) mit dem Kühler (30) derart, dass die Lotschicht (20, 40) sich zwischen dem Ständer (10) und dem Kühler (30) befindet; und
- Erwärmen des Kühlers (30) auf die Schmelztemperatur der Lotschicht (20, 40), um eine Lotverbindung (50) zwischen dem Ständer (10) und dem Kühler (30) herzustellen,
wobei der Kühler (30) von wenigstens einem Fluidkanal (32) durchzogen ist, **dadurch gekennzeichnet, dass** der Schritt des Erwärmens die Schritte umfasst:
- Einfüllen einer hochsiedenden Flüssigkeit in den Fluidkanal (32);
- induktives Erwärmen des Kühlers (30) an seiner von dem Ständer (10) abgewandten Seite bis zum Verdampfen der Siedeflüssigkeit; und
- Auskondensieren der Siedeflüssigkeit in dem Fluidkanal, um die Lotschicht (20, 40) auf ihre Schmelztemperatur zu erwärmen.

2. Verfahren gemäß Anspruch 1, wobei das Lotmaterial Zinn enthält.

3. Verfahren gemäß Anspruch 2, wobei der Beschichtungsschritt durch galvanisches Verzinnen des Ständers (10) und/oder des Kühlers (30) erfolgt.

4. Verfahren gemäß einem der der Ansprüche 1 bis 3, wobei der Kühler (30) auch als Träger dient.

5. Verfahren gemäß einem der Ansprüche 1 bis 4, wobei ein Innendruck des Fluidkanals (32) durch ein Überdruckventil begrenzt wird.

6. Verfahren gemäß einem der der Ansprüche 1 bis 5, wobei die elektrische Maschine eine Außenläufermaschine ist, und im Schritt des Beschichtens eine äußere Umfangsfläche des Kühlers (30) und/oder eine innere Umfangsfläche des Ständers (10) zumindest abschnittsweise beschichtet wird; oder wobei die elektrische Maschine eine Innenläufermaschine ist, und im Schritt des Beschichtens eine äußere Umfangsfläche des Ständers (10) und/oder eine innere Umfangsfläche des Kühlers (30) zumindest abschnittsweise beschichtet wird.

## Claims

1. Method for soldering a stator (10) of an electric machine to a cooler (30) with the steps:
- coating the stator (10) and/or the cooler (30), at least partially, with a layer of solder (20, 40);
- bringing together the stator (10) with the cooler (30) such that the layer of solder (20, 40) is between the stator (10) and the cooler (30); and
- heating the cooler (30) to the melt temperature of the layer of solder (20, 40), in order to produce a solder connection (50) between the stator (10) and the cooler (30),
wherein the cooler (30) is passed through by at least one fluid channel (32), **characterised in that** the step of heating comprises the steps:
- pouring a high-boiling liquid into the fluid channel (32);
- inductive heating of the cooler (30) on its side facing away from the stator (10) up to evaporation of the boiling liquid; and
- condensing the boiling liquid in the fluid channel, in order to heat the layer of solder (20, 40) to its melt temperature.

2. Method according to claim 1, wherein the solder material contains tin.

3. Method according to claim 2, wherein the coating step is achieved by electroplating the stator (10) and/or the cooler (30) with tin.

4. Method according to one of claims 1 to 3, wherein the cooler (30) also acts as a support.

5. Method according to one of claims 1 to 4, wherein an internal pressure of the fluid channel (32) is limited by a pressure relief valve.

6. Method according to one of claims 1 to 5, wherein the electric machine is an external rotor machine, and in the step of coating an outer circumferential surface of the cooler (30) and/or an inner circumferential surface of the stator (10) is coated, at least partially; or wherein the electric machine is an internal rotor machine, and in the step of coating an outer circumferential surface of the stator (10) and/or an inner circumferential surface of the cooler (30) is coated, at least partially.

## Revendications

1. Procédé permettant la jonction par brasage d'un stator (10) d'une machine électrique et d'un refroidisseur (30) et comprenant les étapes suivantes :
- le revêtement au moins partiel du stator (10) et/ou du refroidisseur (30) avec une couche de métal d'apport (20, 40) ;
- l'assemblage du stator (10) et du refroidisseur (30) de manière à ce que la couche de métal d'apport (20, 40) se trouve placée entre le stator (10) et le refroidisseur (30) ; et
- l'échauffement du refroidisseur (30) jusqu'à l'atteinte de la température de fusion de la couche de métal d'apport (20, 40) afin d'obtenir une jonction brasée (50) entre le stator (10) et le refroidisseur (30),
le refroidisseur (30) étant traversé par au moins une conduite de fluide (32), **caractérisé en ce que** l'étape de l'échauffement comprend les étapes suivantes :
- le remplissage de la conduite de fluide (32) avec un liquide porté à un haut point d'ébullition ;
- l'échauffement inductif du refroidisseur (30) sur son côté opposé au stator (10) jusqu'à l'évaporation du liquide porté à ébullition ; et
- la condensation dans la conduite de fluide du liquide porté à ébullition pour amener la couche de métal d'apport (20, 40) à sa température de fusion.

2. Procédé selon la revendication 1, le métal d'apport contenant de l'étain.

3. Procédé selon la revendication 2, l'étape du revêtement consistant en l'étamage galvanique du stator (10) et/ du refroidisseur (30).

4. Procédé selon l'une des revendications 1 à 3, le refroidisseur (30) servant également de support.

5. Procédé selon l'une des revendications 1 à 4, la pression à l'intérieur de la conduite de fluide (32) étant limitée par une soupape de surpression.

6. Procédé selon l'une des revendications 1 à 5, la machine électrique étant une machine à rotor externe, et l'étape de revêtement consistant à recouvrir au moins partiellement une surface périphérique extérieure du refroidisseur (30) et/ou une surface périphérique intérieure du stator (10) ; ou la machine électrique étant une machine à rotor intérieur, et l'étape du revêtement consistant à recouvrir au moins partiellement une surface périphérique extérieure du stator (10) et/ou une surface périphérique intérieure du refroidisseur (30)
